# EUROPEAN PATENT APPLICATION

(11) **EP 1 932 422 A1**
(43) Date of publication of application: **18.06.2008**
(21) Application number: 07008181.5
(22) Date of filing: 23.04.2007
(51) Int. Cl.: A01K 15/02

(54) **Animal behavior modification system**

(30) Priority: 14.12.2006 US 610685
(71) Applicant: Innotek, Inc., Garrett IN 46738 (US)
(72) Inventor: Taylor, Todd T., Kendallville, Indiana (US)
(74) Representative: Sawodny, Michael-Wolfgang

(57) **Abstract**

An animal behavior modification system kit (28,30,32) including a receiver (12) mountable to a collar (14) and a plurality of pairs of electrodes (16). Each of the plurality of pairs (28,30,32) of electrodes being selectively connectable to the receiver. Each of the plurality of pairs of electrodes include an electrical connection (18) and a body (20). The body is made of an electrically resistive material extending from the electrical connection. At least one of the pairs of electrodes have bodies with an electrically resistive material which is different from another of the pairs.

## Description

### 1. Field of the Invention

The present invention relates to an animal behavior modification system, and, more particularly, to an animal behavior modification system with changeable electrodes.

### 2. Description of the Related Art

Stimulation devices are used for the modification of the behavior of an animal. The stimulation device is often associated with a collar worn by the animal and is provided to improve the behavior of the animal. Some stimulation devices include twin electrodes that are positioned against the skin of an animal, which delivers an electrical stimulus to modify the behavior of the animal. The stimulus can also be in the form of a vibration, an audible noise or other sensory stimulation to gain the attention of the animal.

Avoidance and containment systems include geographical boundaries that are defined by an electrical signal, which may come from a buried antenna. As the animal approaches the radiating antenna a receiver in the receiver/stimulation unit connected to a collar around the animal's neck is activated to warn and/or provide a stimulus to the animal to avoid the restricted area.

Examples of other animal training systems include a remote training transmitter, which is hand operated by a human trainer and which communicates with a receiver associated with the stimulus unit on the animal's collar. Bark control collars are also known where a collar worn receiver may receive audio or vibration signals from a microphone or transducer attached or connected to the receiver unit or the collar, and provides appropriate training stimulus to reduce barking.

What is needed in the art is an easily configurable stimulus unit for the training of an animal.

### SUMMARY OF THE INVENTION

The present invention provides an animal behavior modification system and kit having selectively replaceable electrodes.

The invention in one form is directed to an animal behavior modification system kit including a receiver mountable to a collar and a plurality of pairs of electrodes. Each of the plurality of pairs of electrodes being selectively connectable to the receiver. Each of the plurality of pairs of electrodes include an electrical connection and a body. The body is made of an electrically resistive material extending from the electrical connection. At least one of the pair of electrodes have bodies with an electrically resistive material which is different from another pair of electrodes.

An advantage of the present invention is that the stimulus to the animal can be altered by selecting electrodes having a desirable resistive property.

Another advantage of the present invention is that combinations of electrodes can be utilized to tailor the electrical stimulus applied to an animal.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:

Fig. 1 is a perspective schematicized view of an animal behavior modification system using an embodiment of the electrodes of the present invention;

Fig. 2 illustrates a receiver/stimulus unit worn by the dog of Fig. 1;

Fig. 3 illustrates one embodiment of an electrode of the present invention used with the receiver/stimulus unit of Figs 1 and 2;

Fig. 4 illustrates another embodiment of an electrode of the present invention used with the receiver/stimulus unit of Figs 1 and 2;

Fig. 5 illustrates another embodiment of an electrode used with the receiver/stimulus unit of Figs. 1 and 2; and

Fig. 6 illustrates an embodiment of a kit utilizing electrodes of the receiver/stimulus unit of Figs. 1 and 2.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

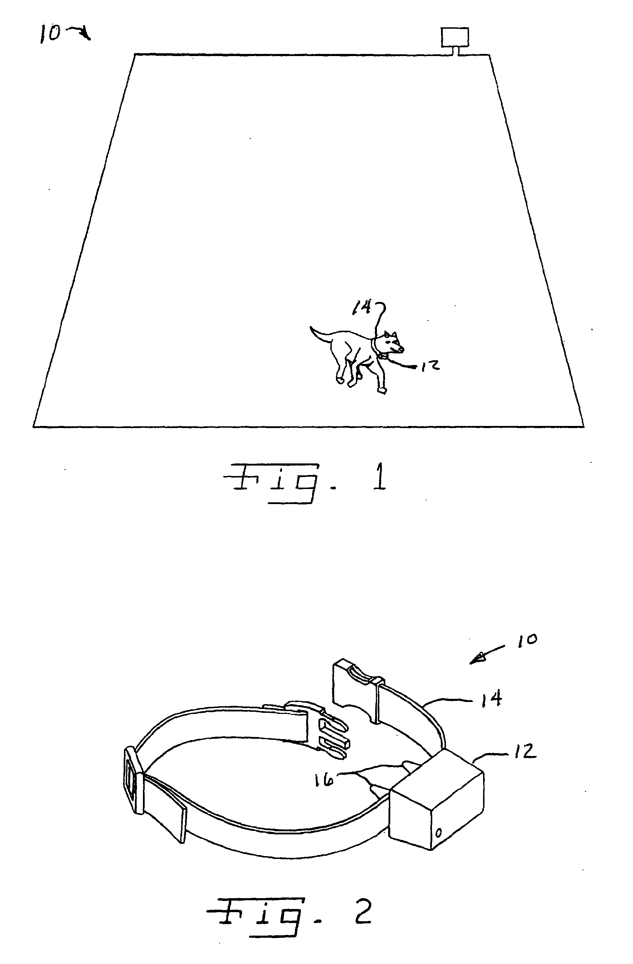

Referring now to the drawings, and more particularly to Figs. 1 and 2, there is shown an animal behavior modification system 10 including a receiver 12 mountable to collar 14 and electrodes 16 extending from receiver 12. Training system 10 is illustrated as a containment type system having a wire loop antenna associated with a transmitter. As the animal approaches the wire loop, receiver 12 is activated causing a stimulus to be supplied to the animal by way of electrodes 16. Although illustrated as a confinement type system, the present invention is directed to training systems as well as confinement and avoidance type systems. Electrodes 16 are removably connected to receiver 12 and are shaped to extend so as to come into contact with or to become proximate with the skin of the dog.

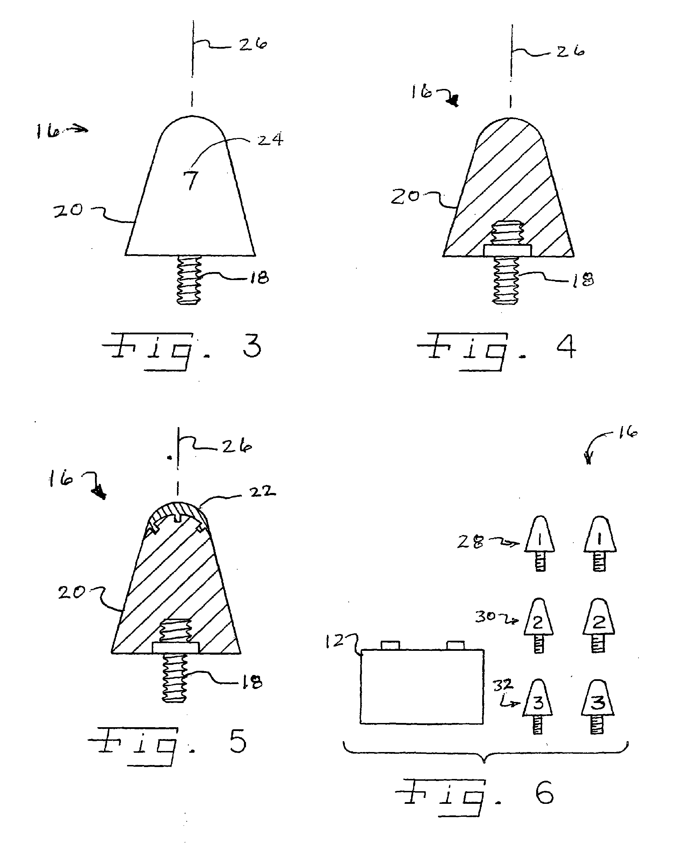

Now, additionally referring to Figs. 3-5 there is shown three embodiments of electrodes 16 each with an electrical connection 18 and a body 20. Although electrical connection 18 is illustrated as a male threaded portion that would screw into a portion of receiver 12, other configurations of electrical connection 18 are also contemplated including a female threaded portion, a snap-on portion, and a slide-on connection. Body 20 is made of a resistive material that serves to alter the electrical energy delivered to the dog from receiver/stimulus unit 12.

In Fig. 3, body 20 and electrical connection 18 are integral and may be made of the same material, such as a metal, conductive plastics, conductive ceramics and/or any electrically resistive material. Conductive plastic include a polymer having a conductive material added thereto so as to alter the electrical conductivity of the plastic. In a similar manner conductive ceramics include a conductive material that is mixed with the raw material prior to forming a ceramic structure. The physical shape of body 20 combined with the resistivity of the material result in the electrical resistance of body 20. For example, a longer thinner body 20 will result in a higher resistance than a shorter wider body 20 for a given material, since the electrical path of the former is more constricted than the latter. Identically shaped bodies 20 having different resistances are producible by using different conductive materials or mixes of materials added to the polymer or ceramic materials. Different metal alloys having different conductivities can likewise be used.

Body 20 has an identifier 24 on a surface so that identifier 24 can be easily selected from a group of electrodes 16 in the form of matched electrodes 16 having similar identifiers. Identifier 24 relates to the resistivity of body 20 and may be in the form of an alphanumeric character, a symbol and/or a color. Although not shown on the embodiments of Figs. 4 and 5, identifier 24 could also be on a surface of body 20.

Referring now to Fig. 4, electrical connection 18 is connected to body 20 as separate parts allowing body 20 to be molded onto electrical connection 18. Alternatively, electrical connection 18 can be an internal feature of body 20, such as a female threaded portion.

The embodiment in Fig. 5 additionally includes a conductive tip 22 on a distal end of body 20 opposite of electrical connection 18. Conductive tip 22 acts a collector for the electrical current passing through body 20 and preferably is made of metal, such as stainless steel. In all of the embodiments electrical connection 18 and body 20 are substantially symmetrical about an axis 26. Additionally, conductive tip 22 is substantially symmetrical about axis 26. In each of the embodiments the resistive material of body 20 alters the electrical output of receiver/stimulus unit 12. The distribution of the resistive material of body 20 can be uniform throughout or have a gradient attribute, such that the material closest to axis 26 would be less resistive than the material farther from axis 26.

A uniform distribution of resistive characteristics of electrode 16 allows for easy manufacture thereof. A gradient-type distribution of resistivity of body 20 makes a defining path through body 20 for the stimulus energy to travel. For example, if half of the maximum diameter of body 20 closest to axis 26 is of a lower resistivity than that which extends beyond half of the diameter, then the energy would mainly be directed to the distal end of body 20.

Conductive tip 22, which is on the distal end of body 20 allows for a distribution of electric potential to conductive tip 22. Once the potential has traveled through body 20 it is uniformly distributed across a surface of conductive tip 22.

Several electrodes 16 are supplied with a single receiver 12 or are obtained separately. For example, eight pairs of electrodes 16 each carrying an identifier 24 that relates each of the eight pairs to each other allows for a simple selection by an operator for the connection of a selected set of electrodes 16 to receiver 12.

Now, additionally referring to Fig. 6, there is illustrated a kit of electrodes including a first set 28, a second set 30 and a third set 32 each of which are connectable to a receiver 12. Although three sets are shown, other numbers of electrodes 16 are also contemplated, such as the eight pairs previously mentioned. The eight pairs of electrodes 16 may be numerically numbered from 1 to 8, with each pair of electrodes having the same numeral. Each numeral is associated with a resistivity which controllably alters the stimulus to the animal. For example, numeral 1 may correspond to the most resistive through number 8 being the least resistive. In this manner, the animal behavior modification system 10 can be modified by a selection of a set of electrodes from the kit of eight pairs. Additionally, a table can be utilized to show the effect of selecting electrodes that do not have matching identifiers 24. For example, if a selection between level 3 and 4 is desired, one electrode with a numeral 3 and one electrode with a numeral 4 would be attached to receiver 12 to provide a response that is between level 3 and level 4. This is possible since the stimulus received by the animal will be determined by the total resistivity of electrodes 16. This advantageously allows a user to utilize combinations of electrodes 16 that are more than one level different than in the previous example. The eight pairs of electrodes used in a kit in the foregoing example are illustrative and any number of electrode sets may be provided.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An animal behavior modification system kit, comprising:
a receiver mountable to a collar; and
a plurality of pairs of electrodes, each of said plurality of pairs of electrodes being selectively connectable to said receiver, each electrode of said plurality of pairs of electrodes including:
an electrical connection; and
a body made of an electrically resistive material extending from said electrical connection, at least one said pair of electrodes having bodies with an electrically resistive material which is different from another said pair.

2. The kit of claim 1, wherein said resistive material is not uniformly resistive throughout said body.

3. The kit of claim 2, wherein said body has a longitudinal axis, said resistive material being less resistive proximate said longitudinal axis than said resistive material away from said longitudinal axis.

4. The kit of claim 3, wherein said electrical connection is substantially coaxial with said longitudinal axis.

5. The kit of claim 4, wherein said body further comprises a conductive portion connected to said resistive material.

6. The kit of claim 5, wherein said conductive portion is substantially symmetrical with respect to said longitudinal axis.

7. The kit of claim 6, wherein said body has a distal end opposite said electrical connection, said conductive portion covering said distal end.

8. The kit of claim 1, wherein said plurality of electrodes each have a resistive value and a corresponding identifier associated with said resistive value.

9. The kit of claim 8, wherein said identifier is one of alphanumeric characters, a symbol and a color.

10. The kit of claim 8, wherein said plurality of electrodes include a first electrode and a second electrode, said first electrode and said second electrode being selected with the same identifier.

11. The kit of claim 1, wherein said resistive material is substantially uniformly resistive throughout said body.

12. The kit of claim 11, wherein said body further comprises a conductive portion connected to said resistive material.

13. The kit of claim 12, wherein said conductive portion is substantially symmetrical with respect to a longitudinal axis.

14. The kit of claim 13, wherein said body has a distal end opposite said electrical connection, said conductive portion covering said distal end.

15. An electrode for use with an animal training system, comprising:
an electrical connection; and
a body made of an electrically resistive material extending from said electrical connection, wherein said electrically resistive material is selected from the group consisting of metal and conductive plastics, each with a different resistance value.

16. The electrode of claim 15, wherein said resistive material is not uniformly resistive throughout said body.

17. The electrode of claim 15, wherein said body has a longitudinal axis, said resistive material being less resistive proximate said longitudinal axis than said resistive material away from said longitudinal axis.

18. A method of altering an electrical output of an animal training system, comprising the steps of:
selecting two electrodes dependent on a resistive rating of a body of said electrodes; and
electrically connecting said two electrodes to a receiver that is mountable to a collar, said electrodes including a resistive material extending from an electrical connection, wherein said resistive material is selected from the group of resistive materials consisting of metal and conductive plastics, said two electrodes having a different resistance value from other electrodes in which said two electrodes are selected in said selecting step.

19. The method of claim 19, wherein said electrodes include a conductive portion connected to said resistive material.

20. The method of claim 18, wherein said conductive portion is substantially symmetrical with respect to a longitudinal axis.
